# EUROPEAN PATENT SPECIFICATION

(11) **EP 3 020 116 B1**
(45) Date of publication and mention of the grant of the patent: **26.04.2017**
(21) Application number: 14734174.7
(22) Date of filing: 02.07.2014
(51) Int. Cl.: H02J 50/05, H02J 5/00

(54) **CAPACITIVE POWERING SYSTEM WITH INCREASED EFFICIENCY**
KAPAZITIVES BESTROMUNGSSYSTEM MIT ERHÖHTER EFFIZIENZ
SYSTÈME D'ALIMENTATION CAPACITIF AVEC EFFICACITÉ ACCRUE

(30) Priority: 11.07.2013 EP 13176196
(43) Date of publication of application: 18.05.2016
(73) Proprietor: Philips Lighting Holding B.V., 5656 AE Eindhoven (NL)
(72) Inventor: VAN DEN BIGGELAAR, Theodorus Johannes Petrus, 5656 AE Eindhoven (NL); ACKERMANN, Bernd, 5656 AE Eindhoven (NL)
(74) Representative: van Eeuwijk, Alexander Henricus Waltherus
(86) International application number: PCT/EP2014/064018
(87) International publication number: WO 2015/003962

(56) References cited:
- WO-A1-2013/024391
- DE-A1-102009 003 846
- US-A- 5 166 858
- US-A1- 2010 087 143
- US-A1- 2013 088 092
- DANIEL C LUDOIS ET AL: "Capacitive Power Transfer for Rotor Field Current in Synchronous Machines", IEEE TRANSACTIONS ON POWER ELECTRONICS, IEEE SERVICE CENTER, PISCATAWAY, NJ, US, vol. 27, no. 11, 1 November 2012 (2012-11-01), pages 4638-4645, XP011448281, ISSN: 0885-8993, DOI: 10.1109/TPEL.2012.2191160

## Description

### FIELD OF THE INVENTION

The invention relates to a capacitive powering system, comprising: a) a receiver element, comprising a pair of flat receiver electrodes connected to a load; b) a transmitter element, comprising a pair of flat transmitter electrodes connected to a driver and positioned parallel to the pair of receiver electrodes; c) an inductor for resonating the system during its powering, and d) a first insulation layer being positioned between the pair of flat receiver electrodes and the pair of flat transmitter electrodes, in order to form a capacitive impedance between the transmitter electrodes and the receiver electrodes during powering of the system. The invention also relates to a receiver element, adapted for use in a capacitive powering system.

### BACKGROUND OF THE INVENTION

Capacitive powering systems are used for wireless power transfers and, more particularly, to wireless power transfers over large areas. With wireless power transfer electrical power can be supplied without any wires or contacts, so that the powering of electronic devices is performed through a wireless medium. One popular application for contactless powering is charging of portable electronic devices, e.g., mobile phones, laptop computers, and the like. A first implementation of wireless power transfer is found in inductive powering systems. In such systems, the electromagnetic inductance between a power source (transmitter) and the device (receiver) allows for contactless power transfer. Both the transmitter and receiver are fitted with electrical coils. When brought into physical proximity, an electrical signal flows from the transmitter to the receiver.

Capacitive coupling is another wireless power transfer technique, which is becoming more and more popular. This technique is predominantly used in data transfer and sensing applications. A car-radio antenna glued on the window with a pick-up element inside the car is an example of a capacitive coupling. The capacitive coupling technique is also used for contactless charging of electronic devices. For such applications, the charging unit or transmitter (implementing the capacitive coupling) operates at frequencies outside the inherent resonant frequency of the device.

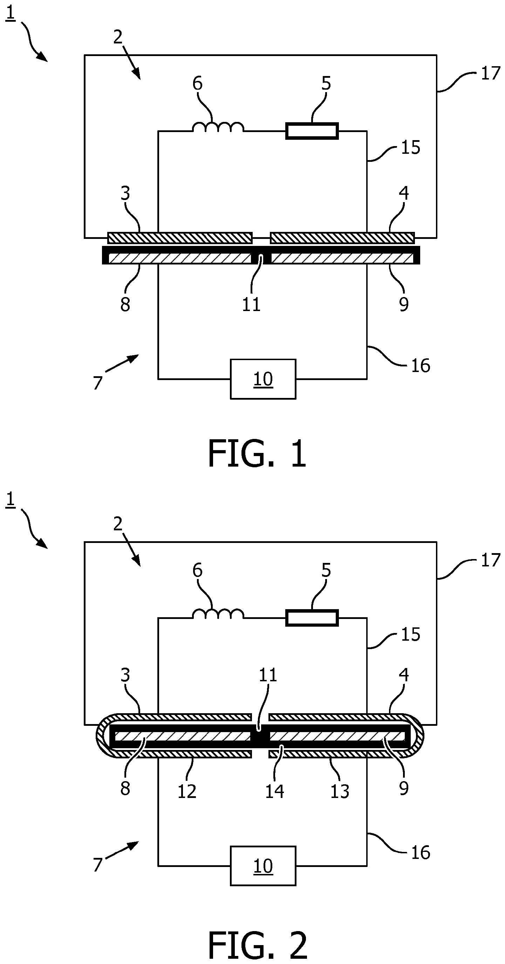

A capacitive powering system of the type mentioned in the opening paragraph is known as such. More particularly, the patent application filed in the name of the present applicant and having publication number WO2013/024432-A2 discloses a capacitive contactless powering system comprising a receiver element and a transmitter element, which may work together during the powering action. The system shown in Figure 1 of this publication shows a receiver element having two flat electrodes S1 and S2 which are connected by electrical wiring via an inductor L1 to a load. The system further shows a transmitter element having two further flat and oblong electrodes T1 and T2, referred to with numbers 121 and 122 in said Figure 1. These electrodes are connected by electrical wiring via an additional inductor to a driver, which is connected to a power supply.

An insulating layer is sandwiched between the pair of transmitter electrodes T1 and T2 on the one hand side and the pair of receiver electrodes S1 and S2. During operation of the system, capacitive impedance is formed between the pair of transmitter electrodes T1 and T2 and the pair of receiver electrodes S1 and S2. In this situation a power signal generated by the driver is wirelessly transferred from the pair of transmitter electrodes T1 and T2 to the pair of receiver electrodes S1 and S2 in order to power the load when a frequency of the power signal matches a series-resonance frequency of the first inductor L1 and the capacitive impedance.

The known capacitive power transfer system makes use of an AC signal delivering power from a power supply to a tuned circuit consisting of a series of capacitors C, and inductor L and a load R. The capacitors are formed by the overlap areas of the isolated flat transmitter electrodes T1 and T2 and the flat receiver electrodes, S1 and S2. Capacitor C1 is formed by the overlap area defined by flat electrodes T1 - S1 and capacitor C2 is formed by the overlap area defined by flat electrodes T2 - S2. The frequency used in the AC signal (closely) approaches the series-resonance of the circuit. In this case the imaginary impedances of the capacitors and inductors are canceled, resulting in a low-ohmic circuit, capable of delivering power to the load at low losses.

Although the known capacitive powering systems generally functions well, there is a continuous desire to improve its powering efficiency. Especially the amount of losses caused by the capacitors as defined by the overlap area of the corresponding transmitter and receiver electrodes are considered to be too high.

### SUMMARY OF THE INVENTION

It is an object of the invention to overcome or at least mitigate the indicated technical problem of the prior art capacitive powering system. More particularly, the invention aims at enhancing the powering efficiency of the known system. Especially the amount of electrical losses generated by the capacitors formed by the overlapping transmitter and receiver electrodes need to be reduced, preferably without increasing the surface dimensions of the electrodes.

These and possible further objects of the invention are achieved by means of a capacitive powering system, comprising: a) a receiver element, comprising a pair of flat receiver electrodes connected to a load; b) a transmitter element, comprising a pair of flat transmitter electrodes connected to a driver and positioned parallel to the pair of receiver electrodes; c) an inductor for resonating the system during its powering, and d) a first insulation layer being positioned between the pair of flat receiver electrodes and the pair of flat transmitter electrodes, in order to form a capacitive impedance between the transmitter electrodes and the receiver electrodes during powering of the system, wherein the system further comprises a second pair of flat receiver electrodes and a second insulation layer, whereby the second pair of flat receiver electrodes is also positioned parallel to the pair of flat transmitter electrodes and the second insulation layer is positioned between the second pair of flat receiver electrodes and the pair of flat transmitter electrodes, such that the pair of flat transmitter electrodes is sandwiched between both pairs of receiver electrodes and the electrodes of both pairs of receiver electrodes having the same polarity are electrically connected.

The invention is essentially based on the recognition by the inventors that an increase of the capacitor area can be obtained by the positioning of an additional pair of flat receiver electrodes just to the 'free' side of the transmitter electrodes, which 'free' side is located opposite to the side where the first pair of flat receiver electrodes are positioned. In this way, the capacitor surface area can in principle be doubled without increasing the surface dimensions of both the receiver electrodes and the transmitter electrodes. The inventors further recognized that in principle the capacitive losses can be reduced by increasing the total surface area of the capacitors while maintaining the materials and dimensions of the electrodes and the insulation layer the same.

The electrodes having the same electrical polarity in the pairs of receiver electrodes are electrically connected. This connection may be realized via one or more electrically conductive wires, for example of a metal like copper or aluminum.

The parallel positioning of the flat transmitter electrodes to the flat receiver electrodes is to be understood that the angle between a normal on the surface of the transmitter electrode and a normal on the surface of the corresponding receiver electrode is less than 30 degrees, preferably less than 20 degrees and more preferably less than 10 degrees. The receiver electrodes and the transmitter electrodes are flat, but will accept a small curvature, especially on surfaces that do not face another electrode. The two separate electrodes of each pair of electrodes are preferably designed such that they are at distance in a single flat plane.

An inductor allows ensuring the functioning of a capacitive powering system. Such inductor is used for resonating the system during its powering. At least one inductor needs to be present in the electrical circuit of either the transmitter element or the receiver element. Thus such inductor may be positioned in the electrical wiring between one of the transmitter electrodes and the driver. Alternatively, the inductor may also be positioned in the electrical wiring between one of the receiver electrodes and the load. When only one inductor is present in the capacitive powering system, said inductor is preferably comprised in the receiver element for safety reasons. It is stressed that both the receiver element and the transmitter element may contain one or more inductors in their electrical circuit.

An interesting embodiment of the capacitive powering system according to the present invention is characterized in that the first insulation layer and the second insulation layer are mounted to the flat pair of transmitter electrodes. A system according to this design has the advantage that the usually oblong transmitter electrodes remain fully covered by the insulation layer, even when the receiver element is removed from the transmitter element. The pairs of flat receiver electrodes may be free of an insulation layer. Preferably also these electrodes are provided with a thin insulation layer for safety reasons.

Another advantageous embodiment of the invented capacitive powering system has the feature that the first insulation layer and the second insulation layer form a single insulation layer in which the flat pair of transmitter electrodes is embedded. This allows a simple and practical design of the transmitter element. In this design, an insulation layer of a single material may be provided around the pair of two transmitter electrodes, for example by means of an extrusion process. An insulation layer made by such process is seamless, which lowers the risk on electrical failures, like short-cuts between the two electrodes.

Also interesting is the embodiment of the invented capacitive powering system having the characteristic that the first insulation layer and the second insulation layer are made of a flexible insulation material and wherein the flat pair of transmitter electrodes is made of a metal (alloy) material. The transmitter part of the capacitive powering system according to this design may comprise a flexible flat cable or a so-called flex-foil. Typical insulation materials which may be used in this embodiment comprise polyolefin materials, like polyethylene (PE) or polypropylene (PP) and polyimides, like Kapton™. Typical metal (alloys) which are suitable for use as electrode materials are copper and aluminum or alloys of these metals with other metals.

A further practical embodiment of the capacitive powering system according to the current invention has the feature that the pair of flat receiver electrodes is provided on a first plate of an electrically insulating material and that the second pair of flat receiver electrodes is provided on a second plate of electrically insulating material, between which plates the flat pair of transmitter electrodes can be positioned. A powering system according to this design has the practical advantage that the flat plates may provide a rigid support to the pairs of receiver electrodes. One of the plates may form a member of the transmitter element part in which the load is accommodated. The first and second plates are preferably made of an electrically insulating material.

An advantageous embodiment of the capacitive powering system according to latter design has the feature that the two plates are provided with means for clamping the plates around the flat pair of transmitter electrodes. These clamping means may be arranged for a simple fastening of the receiver part to the transmitter part. The clamping pressure may contribute to a good contact of the corresponding transmitter and receiver electrodes, thus providing an optimal power transfer to the load. The clamping means are preferably detachable, thus allowing the fastening and unfastening of the receiver element respectively to and from the transmitter element. Suitable detachable clamping means may include screws or (resilient) clamps.

Also practical is the embodiment of the invented powering system, which has the feature that the two plates are moveably clampable around the flat pair of transmitter electrodes. This embodiment of the invention allows that the receiver element may be moved along the pair of transmitter electrodes of the transmitter element, after the receiver element has been clamped around said transmitter electrodes. This is especially interesting in case that the transmitter electrodes are designed as a (flexible) cable or flex-foil. Such cable or foil can be attached to a structure like a wall whereas the actual positioning of the receiver element can be determined by a user by means of simply moving the receiver element along the cable or foil.

A further advantageous embodiment of a capacitive powering system having latter design has the feature that the means for clamping comprise a hinge element, which is provided at an edge of the plates. Thus, the plates of the receiver element are simply kept together by means of the attached hinge. As a consequence, orientation of the plates during their clamping around the transmitter electrodes becomes very simple by this measure.

An even further advantageous embodiment of the invented powering system pursuant to latter embodiment is characterized in that the two plates further comprise detachable connection means at an opposing edge of the plates. By fastening these connection means, the plates may become automatically clamped around the pair of two flat transmitter electrodes, thus bringing both pairs of receiver electrodes in close contact with the corresponding transmitter electrodes. Electrical short-cuts are however prevented due to the presence of at least one insulation layer between the facing transmitter and receiver electrodes. Suitable connection means may include screws and/or (detachable) clamps.

Interesting is also the embodiment of the invented capacitive powering system, in which at least one of the pairs of flat receiver electrodes comprise at least two parallel sub-electrodes, which are positioned at a certain distance from each other. A powering system according to this design may have an even further increased powering efficiency, as the pair of transmitter electrodes can be looped between these sub-electrodes. Thus, the total area of overlap between the transmitter electrodes and the receiver electrodes can be increased while maintaining the largest surface area of the individual transmitter electrodes. Such increased capacitor area will contribute to lower capacitive losses.

In a practical embodiment of the powering system according to the invention, at least one of the pairs of receiver electrodes is mechanically attached to a housing in which the load and the inductor are contained. Actually, said plate may even form part of the bottom of such housing. The presence of the housing contributes to the electrical safety of the capacitive powering system, as the load and the inductor cannot simply be manually touched. Said housing preferably comprises means for connecting a light source, so that such housing may function as a luminaire. The connection means preferably comprise a light source, which may preferably include an LED. Said LED or other light source may function as the load in the receiver element. It is advantageous when the light source is detachably connected in the connection means.

The invention also relates to a receiver element, which is adapted for use in a capacitive powering system according to the present invention, as described in the previous paragraphs. Said receiver element is preferably designed as a luminaire containing a light source as the load. Said light source preferably includes one or more LED(s).

### BRIEF DESCRIPTION OF THE INVENTION

These and other aspects of the invention will be apparent from and elucidated with reference to the embodiments described hereinafter.

In the drawings:
Figure 1 shows in cross section an embodiment of the capacitive powering system not according to the present invention,
Figure 2 shows in cross section a first embodiment of the capacitive powering system according to the present invention,
Figure 3 shows a perspective view of a receiver element for use in a second embodiment of the capacitive powering system according to the present invention,
Figure 4 shows a perspective view of the second embodiment of the invented capacitive powering system of Figure 3,
Figure 5 shows a perspective view of the second embodiment of the invented capacitive powering system applied to a wall, and
Figure 6 shows in cross section a third embodiment of the capacitive powering system according to the present invention.

It is stressed that the drawing is schematic and not to scale. In the different Figures, the same elements are denoted with the same reference numbers.

### DETAILED DESCRIPTION OF EMBODIMENTS

Figure 1 shows in cross section an embodiment of the capacitive powering system 1 not according to the present invention. More particularly, Figure 1 shows a capacitive powering system comprising a receiver element 2 and a transmitter element 7. Receiver element 2 comprises a pair of flat receiver electrodes 3 and 4 made of metal, which are connected via a wiring 15 and through an inductor 6 to a load 5, which may contain a lamp, which lamp preferably may be embodied as an LED. Wiring 15, load 5 and inductor 6 are accommodated in a housing 17, whereas receiver electrodes 3 and 4 are attached on the outside of said housing 17. Transmitter element 7 comprises a pair of flat transmitter electrodes 8 and 9 made of metal, which are connected via a wiring 16 to a driver 10. Said driver 10 is connected to an AC power supply (not shown).

Between the facing surfaces of transmitter electrodes 8 respectively 9 and receiver electrodes 3 respectively 4, a first insulation layer 11 is positioned in order to form a capacitive impedance. The first insulation layer 11 is made of an insulating material, like a polymeric resin, such as PE, PP or a polyimide such as Kapton™ or a material like paper, and is attached to transmitter electrodes 8 and 9.

During operation of the capacitive powering system 1, the driver 10 generates an AC voltage signal, the amplitude, frequency, and waveform of which can be controlled. The output signal typically has an amplitude of tens of volts and a frequency of up to a few megahertz (MHz). In an exemplary embodiment, the output signal is typically 50V / 400 kHz. During operation of system 1, electrical power is transferred from transmitter element 7 to receiver element 2, so that an electrical current is caused to flow through load 5. Capacitive losses are however observed in powering system 1, which can be mainly determined by the frequency and amplitude of the AC signal generated by the driver 10, the type and thickness of the material of the first insulation layer 11 positioned between the transmitter and receiver electrodes as well as the size of the overlap area of these electrodes.

Figure 2 shows in cross section a first embodiment of the capacitive powering system according to the present invention. This embodiment comprises the same parts as the embodiment not according to the invention shown in Figure 1. The embodiment according to the invention however further comprises a second pair of flat receiver electrodes 12 and 13, which may also be made of metal, and a second insulation layer 14. As shown in Figure 2, the second pair of flat receiver electrodes 12 and 13 is also positioned parallel to the pair of flat transmitter electrodes 8 and 9. The second insulation layer 14 is positioned between the second pair of flat receiver electrodes 12 and 13 and the pair of flat transmitter electrodes 8 and 9. Thus, the overall positioning of electrodes is designed such that the pair of flat transmitter electrodes 8 and 9 is sandwiched between both pairs of receiver electrodes 3, 4, 12 and 13, whereby the electrodes of both pairs of receiver electrodes having the same electrical polarity are electrically connected. Thus, receiver electrode 3 is electrically connected to receiver electrode 12 whereas receiver electrode 4 is electrically connected to receiver electrode 13. In the illustrated exemplary embodiment, these connected electrodes are designed as a single U-shaped electrode.

In this embodiment of the invention, insulation layer 11 and second insulation layer 14 are both mounted to the flat pair of transmitter electrodes 8 and 9. Both insulation layers are preferably made of the same electrically insulating material, such as a polyolefin like PE or PP or a polyimide like Kapton™, whereby transmitter electrodes 8 and 9 are embedded in this material. Even more preferred is the use of a flexible insulation material for both insulation layers 11 and 14, so that the transmitter electrodes and the insulation layers can be designed as a flexible cable or a flex foil.

The additional parts of the second pair of receiver electrodes 12 and 13 and the second insulation layer 14 result in a significant reduction of the capacitive losses generated in powering system 1 during its operation. Thus, when comparing the embodiment of the capacitive powering system 1 not according to the invention (Figure 1) and the embodiment of the capacitive powering system 1 according to the invention (Figure 2) under identical operational conditions (same powering, same materials and sizes of the transmitter and receiver elements, especially same sizes of the surface area of the electrodes), it appears that the capacitive losses can be approximately halved with the invented system.

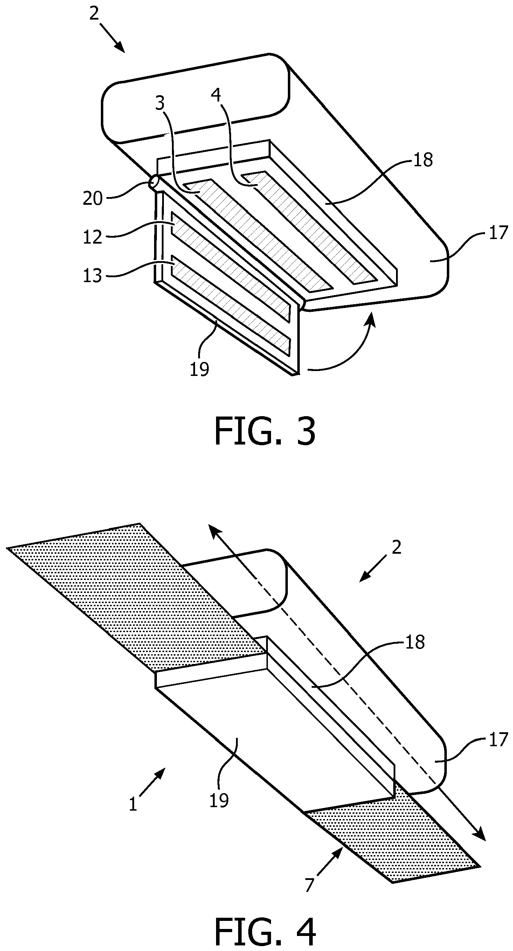

Figure 3 shows a perspective view of an invented receiver element 2 for use in a second embodiment of the capacitive powering system 1 according to the present invention, which system is shown in Figure 4. The receiver element 2 comprises a housing 17 containing a load embodied as a series of LEDs, an inductor and the necessary wiring (not shown in detail). The pair of flat receiver electrodes 3 and 4 is provided on a first plate 18 of an electrically insulating material and the second pair of flat receiver electrodes 12 and 13 is provided on a second plate 19 of an electrically insulating material. One of both plates 18 and 19 is attached to the housing 17, whereby electrical connections are made between receiver electrodes and the wiring inside the housing (not shown). The two plates 18 and 19 are mutually connected with clamping means, and more specifically via a hinge element 20, which is provided at an edge of both plates.

Receiver element 2 may be connected to transmitter element 7 by inserting the flexible cable or flex foil comprising flat transmitter electrodes and insulation layers of said transmitter element 7 between the plates 18 and 19 which comprise the four receiver electrodes 3, 4, 12 and 13, and subsequently closing the plates 18 and 19 by rotation (shown by the arrow in Figure 3). In closed condition, the plates 18 and 19 may be fixed together by means of additional connection means positioned at an opposing edge of the plates (not shown). Such additional connection means may comprise screws or mechanical clamps. Clamps of metal are preferred, as an electrical connection between receiver electrodes 4 and 13 may be arranged via such metal clamps, in combination with vias through plate 19 to receiver electrode 13 and through plate 18 to receiver electrode 4. Electrical connection between the other receiver electrodes 3 and 12 may be arranged by means of the hinge element 20, which can be made of metal or metal alloy.

Figure 4 shows the embodiment of the capacitive powering system 1 as described in the previous paragraphs. Thus, transmitter element 7 comprising the insulation layers 11 and 14 as well as electrodes 8 and 9 (here shown as a cable or a flex-foil) is clamped between the plates 18 and 19 comprising electrodes 3, 4, 12 and 13. Due to the special clamping mechanism, receiver element 2 may be moved along the transmitter element 7 in the directions indicated by the arrows shown in Figure 4. The advantage of this embodiment is detailed below.

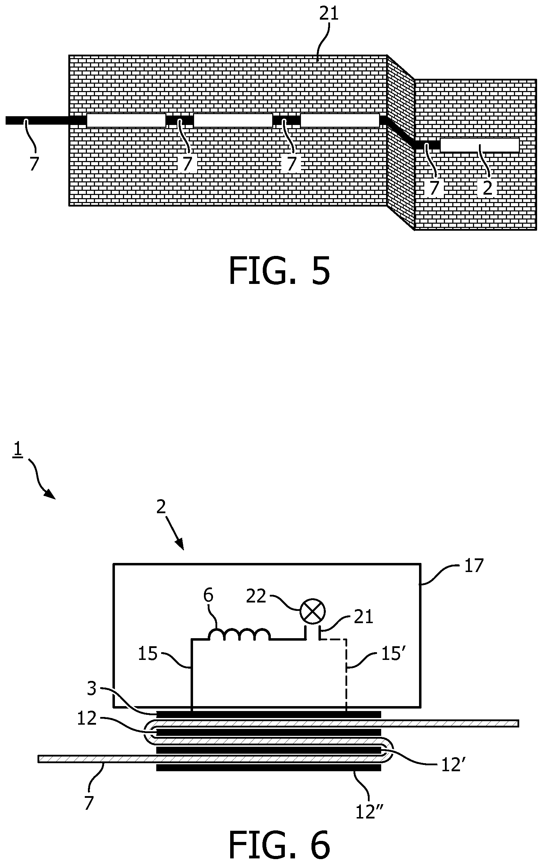

Figure 5 shows schematically a perspective view of the second embodiment of the invented capacitive powering system as applied to a wall 21. Thus, a transmitter element 7, designed as a flat cable comprising a pair of flat transmitter electrodes connected to an AC power supply via a driver (not shown in detail) is attached to wall 21 in a horizontal manner. A number of receiver elements 2, designed as lighting fixtures (not shown in detail) have been moveably clamped around said transmitter elements 7. These receiver elements may be moved over a certain distance along the transmitter elements in a horizontal direction. It goes without saying that the cable may also be positioned in a vertical manner to wall 21, or in any other desired direction.

Figure 6 shows in cross section a third embodiment of the capacitive powering system according to the present invention. Compared with Figure 2, this cross section is drawn after rotation of the system over 90 degrees around a vertical rotation axis positioned in the plane of the drawing. This embodiment again comprises a transmitter element 7, here designed as a cable with transmitter electrodes and insulation layer, as well as a receiver element 2. Latter receiver element comprises a housing in which wiring 15 attached to the electrode 3, a light source 22 connected to connection means 21 and an inductor are contained. In this specific embodiment, one of the pair of receiver electrodes 12 and 13 comprise two additional pairs of sub-electrodes. More particularly, electrode 12 comprises two additional sub-electrodes 12' and 12", which are positioned at a certain distance of each other in a parallel manner. Due to the view in rotation, receiver electrodes 4 and 13 as well as corresponding sub-electrodes 13'and 13" are not shown, whereas associated wiring 15' electrically connecting these (sub)electrodes is indicated by a dotted line.

The here described embodiment of the invented capacitive powering system 1 has the clear advantage that even smaller capacitive losses may be achieved as compared to the embodiments described earlier in this patent application. Thus, the transmitter element 7 designed as a cable can now be looped through the four receiver electrodes 3, 12, 12'and 12".

As a result, the total overlap surface area between the relevant transmitter and receiver electrodes is now multiplied by three with respect to the invented capacitive powering system 1 shown in Figure 2. With regard to the capacitive powering system described in the prior art (see Figure 1), the overlap surface area is even six times enlarged, without increasing the surface dimensions of the electrodes itself. Such enlarged capacitive surface area again results in lower capacitive losses. Thus, the capacitive losses of the embodiment shown in Figure 6 amounts to approximately 16% of the losses present in the prior art capacitive powering system as shown in Figure 1.

While the invention has been illustrated and described in detail in the drawing and foregoing description, such illustration and description are to be considered illustrative or exemplary and not restrictive. The invention is not limited to the disclosed embodiments. Other variations to the disclosed embodiments can be understood and effected by those skilled in the art in practicing the claimed invention, from a study of the drawings, the disclosure, and the appended claims. For example, a skilled person will realize that the use of more sub-electrodes in the design of the flat receiver electrodes may result in even larger reduction of said capacitive losses.

In the claims, the word 'comprising' does not exclude other elements or steps, and the indefinite article 'a' or 'an' does not exclude a plurality. The mere fact that certain measures are recited in mutually different claims does not indicate that a combination of these measures cannot be used to advantage. Any reference signs in the claims should not be construed as limiting the scope of these claims.

## Claims

1. A capacitive powering system (1), comprising:
a receiver element (2), comprising a pair of flat receiver electrodes (3, 4) connected to a load (5),
a transmitter element (7), comprising a pair of flat transmitter electrodes (8, 9) connected to a driver (10) and positioned parallel to the pair of receiver electrodes (3, 4),
an inductor (6) for resonating the system during its powering, and
a first insulation layer (11) being positioned between the pair of flat receiver electrodes (3, 4) and the pair of flat transmitter electrodes (8, 9), in order to form a capacitive impedance between the transmitter electrodes and the receiver electrodes during powering of the system,
the system further comprising a second pair of flat receiver electrodes (12, 13) and a second insulation layer (14), whereby the second pair of flat receiver electrodes (12, 13) is also positioned parallel to the pair of flat transmitter electrodes (8, 9) and the second insulation layer (14) is positioned between the second pair of flat receiver electrodes (12, 13) and the pair of flat transmitter electrodes (8, 9), such that the pair of flat transmitter electrodes is sandwiched between both pairs of receiver electrodes and the electrodes of both pairs of receiver electrodes having the same polarity (3 and 12 respectively 4 and 13) are electrically connected,
wherein the pair of flat receiver electrodes (3, 4) is provided on a first plate (18) of an electrically insulating material and wherein the second pair of flat receiver (12, 13) electrodes is provided on a second plate (19) of electrically insulating material, between which plates the flat pair of transmitter electrodes (8, 9) can be positioned, the two plates (18, 19) being provided with means for clamping the plates around the flat pair of transmitter electrodes (8, 9), the two plates (18, 19) being moveably clampable around the flat pair of transmitter electrodes (8, 9).

2. A capacitive powering system (1) according to claim 1, wherein the first insulation layer (11) and the second insulation layer (14) are mounted to the flat pair of transmitter electrodes (8, 9).

3. A capacitive powering system (1) according to claim 2, wherein the first insulation layer (11) and the second insulation layer (14) form a single insulation layer in which the flat pair of transmitter electrodes (8, 9) is embedded.

4. A capacitive powering system (1) according to claim 2 or 3, wherein the first insulation layer (11) and the second insulation layer (14) are made of a flexible insulation material and wherein the flat pair of transmitter electrodes (8, 9) is made of a metal or metal alloy material.

5. A capacitive powering system (1) according to claim 1 wherein the means for clamping comprise a hinge element (20), which is provided at an edge of the plates (18, 19).

6. A capacitive powering system (1) according to claim 5, wherein the two plates (18, 19) further comprise detachable connection means at an opposing edge of the plates.

7. A capacitive powering system (1) according to any of the previous claims, wherein at least one of the pairs of flat receiver electrodes (3, 4, 12, 13) comprise at least two parallel sub-electrodes (12', 12", 13', 13") which are positioned at a certain distance from each other.

8. A capacitive powering system (1) according to any of the previous claims, wherein at least one of the pairs of receiver electrodes (3, 4, 12, 13) is mechanically attached to a housing (17) in which the load (5) and the inductor (15) are contained.

9. A capacitive powering system (1) according to claim 8, wherein the housing (17) comprises means (21) for connecting a light source (22).

10. A capacitive powering system (1) according to claim 9 wherein the housing (17) comprises a light source (22).

11. A capacitive powering system (1) according to claim 10, wherein the light source (22) comprises an LED.

12. Receiver element (2), adapted for use in a capacitive powering system (1) according to any of the previous claims, the receiver element adapted for receiving power from a transmitter element (7),
the receiver element (2) comprising:
- a first pair of flat receiver electrodes (3, 4) provided on a first plate (18) of an electrically insulating material, the first pair of flat receiver electrodes (3,4) connected to a load (5),
- a second pair of flat receiver electrodes (12, 13) provided on a second plate of electrically insulating material (19), the second pair of flat receiver electrodes (12,13) connected to the load (5),
- an inductor (6) for resonating the system during its powering,
the transmitter element (7) comprising:
- a pair of flat transmitter electrodes (8, 9) connected to a driver (10),
- a first insulation layer (11) adapted for being positioned between the first pair of flat receiver electrodes (3, 4) and the pair of flat transmitter electrodes (8, 9), in order to form a capacitive impedance between the transmitter electrodes and the receiver electrodes during powering of the system,
- a second insulation layer (14) adapted for being positioned between the second pair of flat receiver electrodes (12, 13) and the pair of flat transmitter electrodes (8, 9),
wherein the first pair and second pair of flat receiver electrodes are arranged to be positioned parallel to the pair of flat transmitter electrodes (8, 9), such that the pair of flat transmitter electrodes is sandwiched between both pairs of receiver electrodes,
wherein the electrodes of both pairs of receiver electrodes having the same polarity (3 and 12 respectively 4 and 13) are electrically connected,
wherein the first plate (18) and the second plate (19) of the receiver element (2) are arranged such that the flat pair of transmitter electrodes (8, 9) can be positioned between the first and the second plate and
wherein the first and the second plates are provided with means for clamping the plates around the flat pair of transmitter electrodes (8, 9), the two plates (18, 19) being moveably clampable around the flat pair of transmitter electrodes (8, 9).

13. Receiver element (2), adapted for use in a capacitive powering system (1) according to any of the previous claims, the receiver element adapted for receiving power from a transmitter element (7),
the receiver element (2) comprising:
- a first pair of flat receiver electrodes (3, 4) provided on a first plate (18) of an electrically insulating material, the first pair of flat receiver electrodes (3,4) connected to a load (5),
- a second pair of flat receiver electrodes (12, 13) provided on a second plate of electrically insulating material (19), the second pair of flat receiver electrodes (12,13) connected to the load (5),
the transmitter element (7) comprising:
- an inductor (6) for resonating the system during its powering,
- a pair of flat transmitter electrodes (8, 9) connected to a driver (10),
- a first insulation layer (11) adapted for being positioned between the first pair of flat receiver electrodes (3, 4) and the pair of flat transmitter electrodes (8, 9), in order to form a capacitive impedance between the transmitter electrodes and the receiver electrodes during powering of the system,
- a second insulation layer (14) adapted for being positioned between the second pair of flat receiver electrodes (12, 13) and the pair of flat transmitter electrodes (8, 9),
wherein the first pair and second pair of flat receiver electrodes are arranged to be positioned parallel to the pair of flat transmitter electrodes (8, 9), such that the pair of flat transmitter electrodes is sandwiched between both pairs of receiver electrodes,
wherein the electrodes of both pairs of receiver electrodes having the same polarity (3 and 12 respectively 4 and 13) are electrically connected,
wherein the first plate (18) and the second plate (19) of the receiver element (2) are arranged such that the flat pair of transmitter electrodes (8, 9) can be positioned between the first and the second plate and
wherein the first and the second plates are provided with means for clamping the plates around the flat pair of transmitter electrodes (8, 9), the two plates (18, 19) being moveably clampable around the flat pair of transmitter electrodes (8, 9).

## Patentansprüche

1. Kapazitives Bestromungssystem (1), umfassend:
ein Empfängerelement (2) mit einem Paar flacher Empfängerelektroden (3, 4), die an eine Last (5) angeschlossen sind,
ein Senderelement (7) mit einem Paar flacher Senderelektroden (8, 9), die an einen Treiber (10) angeschlossen und parallel zu dem Paar Empfängerelektroden (3, 4) positioniert sind,
einen Induktor (6), um das System während des Bestromens in Resonanz zu bringen; sowie
eine erste Isolationsschicht (11) die zwischen dem Paar flacher Empfängerelektroden (3, 4) und dem Paar flacher Senderelektroden (8, 9) positioniert ist, um eine kapazitive Impedanz zwischen den Senderelektroden und den Empfängerelektroden während des Bestromens des Systems zu erzeugen,
wobei das System weiterhin ein zweites Paar flacher Empfängerelektroden (12, 13) und eine zweite Isolationsschicht (14) umfasst, wobei das zweite Paar flacher Empfängerelektroden (12, 13) ebenfalls parallel zu dem Paar flacher Senderelektroden (8, 9) positioniert ist und die zweite Isolationsschicht (14) zwischen dem zweiten Paar flacher Empfängerelektroden (12, 13) und dem Paar flacher Senderelektroden (8, 9) positioniert ist, so dass das Paar flacher Senderelektroden zwischen beiden Paaren Empfängerelektroden angeordnet ist und die Elektroden beider Paare Empfängerelektroden mit der gleichen Polarität (3 und 12 beziehungsweise 4 und 13) elektrisch verbunden sind,
wobei das Paar flacher Empfängerelektroden (3, 4) auf einer ersten Platte (18) aus einem elektrisch isolierenden Material vorgesehen ist, und wobei das zweite Paar flacher Empfängerelektroden (12, 13) auf einer zweiten Platte (19) aus elektrisch isolierendem Material vorgesehen ist, wobei zwischen den Platten das flache Paar Senderelektroden (8, 9) positioniert werden kann, wobei die zwei Platten (18, 19) mit Mitteln versehen sind, um die Platten um das flache Paar Senderelektroden (8, 9) zu klemmen, wobei die zwei Platten (18, 19) klemmbar um das flache Paar Senderelektroden (8, 9) bewegbar sind.

2. Kapazitives Bestromungssystem (1) nach Anspruch 1, wobei die erste Isolationsschicht (11) und die zweite Isolationsschicht (14) an dem flachen Paar Senderelektroden (8, 9) befestigt sind.

3. Kapazitives Bestromungssystem (1) nach Anspruch 2, wobei die erste Isolationsschicht (11) und die zweite Isolationsschicht (14) eine einzelne Isolationsschicht bilden, in der das flache Paar Senderelektroden (8, 9) eingebettet ist.

4. Kapazitives Bestromungssystem (1) nach Anspruch 2 oder 3, wobei die erste Isolationsschicht (11) und die zweite Isolationsschicht (14) aus einem flexiblen Isolationsmaterial gefertigt sind, und wobei das flache Paar Senderelektroden (8, 9) aus einem Metall oder Metalllegierungsmaterial gefertigt ist.

5. Kapazitives Bestromungssystem (1) nach Anspruch 1, wobei die Klemmmittel ein Gelenkelement (20) umfassen, das an einem Rand der Platten (18, 19) vorgesehen ist.

6. Kapazitives Bestromungssystem (1) nach Anspruch 5, wobei die zwei Platten (18, 19) weiterhin abnehmbare Verbindungsmittel an einem gegenüberliegenden Rand der Platten umfassen.

7. Kapazitives Bestromungssystem (1) nach einem der vorangegangenen Ansprüche, wobei mindestens eines der Paare flacher Empfängerelektroden (3, 4, 12, 13) mindestens zwei parallele Subelektroden (12', 12", 13', 13") umfasst, die in einem bestimmten Abstand voneinander positioniert sind.

8. Kapazitives Bestromungssystem (1) nach einem der vorangegangenen Ansprüche, wobei mindestens eines der Paare Empfängerelektroden (3, 4, 12, 13) an einem Gehäuse (17), in dem die Last (5) und der Induktor (15) enthalten sind, mechanisch angebracht ist.

9. Kapazitives Bestromungssystem (1) nach Anspruch 8, wobei das Gehäuse (17) Mittel (21) zum Anschließen einer Lichtquelle (22) umfasst.

10. Kapazitives Bestromungssystem (1) nach Anspruch 9, wobei das Gehäuse (17) eine Lichtquelle (22) umfasst.

11. Kapazitives Bestromungssystem (1) nach Anspruch 10, wobei die Lichtquelle (22) eine LED umfasst.

12. Empfängerelement (2), das zur Verwendung in einem kapazitiven Bestromungssystem (1) nach einem der vorangegangenen Ansprüche eingerichtet ist, wobei das Empfängerelement so eingerichtet ist, dass es Energie von einem Senderelement (7) empfängt,
wobei das Empfängerelement (2) umfasst:
- ein erstes Paar flacher Empfängerelektroden (3, 4), das auf einer ersten Platte (18) aus einem elektrisch isolierenden Material vorgesehen ist, wobei das erste Paar flacher Empfängerelektroden (3, 4) an eine Last (5) angeschlossen ist,
- ein zweites Paar flacher Empfängerelektroden (12, 13), das auf einer zweiten Platte aus elektrisch isolierendem Material (19) vorgesehen ist, wobei das zweite Paar flacher Empfängerelektroden (12, 13) an die Last (5) angeschlossen ist,
- einen Induktor (6), um das System während seines Bestromens in Resonanz zu bringen,
wobei das Senderelement (7) umfasst:
- ein Paar flacher Senderelektroden (8, 9), die an einen Treiber (10) angeschlossen sind,
- eine erste Isolationsschicht (11) zur Positionierung zwischen dem ersten Paar flacher Empfängerelektroden (3, 4) und dem Paar flacher Senderelektroden (8, 9), um eine kapazitive Impedanz zwischen den Senderelektroden und den Empfängerelektroden während des Bestromens des Systems zu erzeugen,
- eine zweite Isolationsschicht (14) zur Positionierung zwischen dem zweiten Paar flacher Empfängerelektroden (12, 13) und dem Paar flacher Senderelektroden (8, 9),
wobei das erste Paar und zweite Paar flacher Empfängerelektroden so angeordnet sind, dass sie parallel zu dem Paar flacher Senderelektroden (8, 9) positioniert sind, so dass das Paar flacher Senderelektroden zwischen beiden Paaren Empfängerelektroden angeordnet ist,
wobei die Elektroden beider Paare Empfängerelektroden mit der gleichen Polarität (3 und 12 beziehungsweise 4 und 13) elektrisch verbunden sind,
wobei die erste Platte (18) und die zweite Platte (19) des Empfängerelements (2) so angeordnet sind, dass das flache Paar Senderelektroden (8, 9) zwischen der ersten und der zweiten Platte positioniert werden kann, und
wobei die erste und die zweite Platte mit Mitteln versehen sind, um die Platten um das flache Paar Senderelektroden (8, 9) zu klemmen, wobei die zwei Platten (18, 19) klemmbar um das flache Paar Senderelektroden (8, 9) bewegbar sind.

13. Empfängerelement (2), das zur Verwendung in einem kapazitiven Bestromungssystem (1) nach einem der vorangegangenen Ansprüche eingerichtet ist, wobei das Empfängerelement so eingerichtet ist, dass es Energie von einem Senderelement (7) empfängt,
wobei das Empfängerelement (2) umfasst:
- ein erstes Paar flacher Empfängerelektroden (3, 4), das auf einer ersten Platte (18) aus einem elektrisch isolierenden Material vorgesehen ist, wobei das erste Paar flacher Empfängerelektroden (3, 4) an eine Last (5) angeschlossen ist,
- ein zweites Paar flacher Empfängerelektroden (12, 13), das auf einer zweiten Platte aus elektrisch isolierendem Material (19) vorgesehen ist, wobei das zweite Paar flacher Empfängerelektroden (12, 13) an die Last (5) angeschlossen ist,
wobei das Senderelement (7) umfasst:
- einen Induktor (6), um das System während seines Bestromens in Resonanz zu bringen,
- ein Paar flacher Senderelektroden (8, 9), die an einen Treiber (10) angeschlossen sind,
- eine erste Isolationsschicht (11) zur Positionierung zwischen dem ersten Paar flacher Empfängerelektroden (3, 4) und dem Paar flacher Senderelektroden (8, 9), um eine kapazitive Impedanz zwischen den Senderelektroden und den Empfängerelektroden während des Bestromens des Systems zu erzeugen,
- eine zweite Isolationsschicht (14) zur Positionierung zwischen dem zweiten Paar flacher Empfängerelektroden (12, 13) und dem Paar flacher Senderelektroden (8, 9),
wobei das erste Paar und zweite Paar flacher Empfängerelektroden so angeordnet sind, dass sie parallel zu dem Paar flacher Senderelektroden (8, 9) positioniert sind, so dass das Paar flacher Senderelektroden zwischen beiden Paaren Empfängerelektroden angeordnet ist,
wobei die Elektroden beider Paare Empfängerelektroden mit der gleichen Polarität (3 und 12 beziehungsweise 4 und 13) elektrisch verbunden sind,
wobei die erste Platte (18) und die zweite Platte (19) des Empfängerelements (2) so angeordnet sind, dass das flache Paar Senderelektroden (8, 9) zwischen der ersten und der zweiten Platte positioniert werden kann, und
wobei die erste und die zweite Platte mit Mitteln versehen sind, um die Platten um das flache Paar Senderelektroden (8, 9) zu klemmen, wobei die zwei Platten (18, 19) klemmbar um das flache Paar Senderelektroden (8, 9) bewegbar sind.

## Revendications

1. Système d'alimentation capacitif (1), comprenant :
un élément récepteur (2), comprenant une paire d'électrodes réceptrices plates (3, 4) connectée à une charge (5),
un élément émetteur (7), comprenant une paire d'électrodes émettrices plates (8, 9) connectée à un pilote (10) et positionnées parallèlement à la paire d'électrodes réceptrices (3, 4),
un inducteur (6) pour faire résonner le système durant son alimentation, et
une première couche d'isolation (11) positionnée entre la paire d'électrodes réceptrices plates (3, 4) et la paire d'électrodes émettrices plates (8, 9), afin de former une impédance capacitive entre les électrodes émettrices et les électrodes réceptrices durant l'alimentation du système,
le système comprenant en outre une deuxième paire d'électrodes réceptrices plates (12, 13) et une deuxième couche d'isolation (14), moyennant quoi la deuxième paire d'électrodes réceptrices plates (12, 13) est également positionnée parallèlement à la première paire d'électrodes émettrices plates (8, 9) et la deuxième couche d'isolation (14) est positionnée entre la deuxième paire d'électrodes réceptrices plates (12, 13) et la paire d'électrodes émettrices plates (8, 9), de telle sorte que la paire d'électrodes émettrices plates est prise en sandwich entre les deux paires d'électrodes réceptrices et les électrodes des deux paires d'électrodes réceptrices ayant la même polarité (3 et 12 respectivement 4 et 13) sont électriquement connectées,
dans lequel la paire d'électrodes réceptrices plates (3, 4) est disposée sur une première plaque (18) d'un matériau électriquement isolant et dans lequel la deuxième paire d'électrodes réceptrices plates (12, 13) est disposée sur une deuxième plaque (19) de matériau électriquement isolant, entre lesquelles plaques la paire plate d'électrodes émettrices (8, 9) peut être positionnée, les deux plaques (18, 19) étant pourvues d'un moyen pour serrer les plaques autour de la paire plate d'électrodes émettrices (8, 9), les deux plaques (18, 19) pouvant être serrées de manière mobile autour de la paire plate d'électrodes émettrices (8, 9).

2. Système d'alimentation capacitif (1) selon la revendication 1, dans lequel la première couche d'isolation (11) et la deuxième couche d'isolation (14) sont montées sur la paire plate d'électrodes émettrices (8, 9).

3. Système d'alimentation capacitif (1) selon la revendication 2, dans lequel la première couche d'isolation (11) et la deuxième couche d'isolation (14) forment une seule couche d'isolation dans laquelle la paire plate d'électrodes émettrices (8, 9) est encastrée.

4. Système d'alimentation capacitif (1) selon la revendication 2 ou 3, dans lequel la première couche d'isolation (11) et la deuxième couche d'isolation (14) se composent d'un matériau d'isolation flexible et dans lequel la paire plate d'électrodes émettrices (8, 9) se compose d'un matériau métallique ou d'alliage métallique.

5. Système d'alimentation capacitif (1) selon la revendication 1 dans lequel le moyen de serrage comprend un élément d'articulation (20), qui se trouve au niveau d'un bord des plaques (18, 19).

6. Système d'alimentation capacitif (1) selon la revendication 5, dans lequel les deux plaques (18, 19) comprennent en outre un moyen de connexion détachable au niveau d'un bord opposé des plaques.

7. Système d'alimentation capacitif (1) selon l'une quelconque des revendications précédentes, dans lequel au moins une des paires d'électrodes réceptrices plates (3, 4, 12, 13) comprend au moins deux sous-électrodes parallèles (12', 12", 13', 13") qui sont positionnées à une certaine distance l'une de l'autre.

8. Système d'alimentation capacitif (1) selon l'une quelconque des revendications précédentes, dans lequel au moins une des paires d'électrodes réceptrices plates (3, 4, 12, 13) est mécaniquement attachée à un boîtier (17) dans lequel la charge (5) et l'inducteur (15) sont contenus.

9. Système d'alimentation capacitif (1) selon la revendication 8, dans lequel le boîtier (17) comprend un moyen (21) pour connecter une source de lumière (22).

10. Système d'alimentation capacitif (1) selon la revendication 9, dans lequel le boîtier (17) comprend une source de lumière (22).

11. Système d'alimentation capacitif (1) selon la revendication 10, dans lequel la source de lumière (22) comprend une DEL.

12. Élément récepteur (2), adapté pour être utilisé dans un système d'alimentation capacitif (1) selon l'une quelconque des revendications précédentes, l'élément récepteur étant adapté pour recevoir la puissance provenant d'un élément émetteur (7),
l'élément récepteur (2) comprenant :
- une première paire d'électrodes réceptrices plates (3, 4) située sur une première plaque (18) d'un matériau électriquement isolant, la première paire d'électrodes réceptrices plates (3, 4) étant connectée à une charge (5),
- une deuxième paire d'électrodes réceptrices plates (12, 13) située sur une deuxième plaque de matériau électriquement isolant (19), la deuxième paire d'électrodes réceptrices plates (12, 13) étant connectée à la charge (5),
- un inducteur (6) pour faire résonner le système durant son alimentation,
l'élément émetteur (7) comprenant :
- une paire d'électrodes émettrices (8, 9) connectée à un pilote (10),
- une première couche d'isolation (11) adaptée pour être positionnée entre la première paire d'électrodes réceptrices plates (3, 4) et la paire d'électrodes émettrices plates (8, 9), afin de former une impédance capacitive entre les électrodes émettrices et les électrodes réceptrices durant l'alimentation du système,
- une deuxième couche d'isolation (14) adaptée pour être positionnée entre la deuxième paire d'électrodes réceptrices plates (12, 13) et la paire d'électrodes émettrices plates (8, 9),
dans lequel la première paire et la deuxième paire d'électrodes réceptrices plates sont agencées pour être positionnées parallèlement à la paire d'électrodes émettrices plates (8, 9), de telle sorte que la paire d'électrodes émettrices plates est prise en sandwich entre les deux paires d'électrodes réceptrices,
dans lequel les électrodes des deux paires d'électrodes réceptrices ayant la même polarité (3 et 12 respectivement 4 et 13) sont électriquement connectées,
dans lequel la première plaque (18) et la deuxième plaque (19) de l'élément récepteur (2) sont agencées de telle sorte que la paire plate d'électrodes émettrices (8, 9) peut être positionnée entre la première et la deuxième plaque et
dans lequel les première et deuxième plaques sont pourvues d'un moyen pour serrer les plaques autour de la paire plate d'électrodes émettrices (8, 9), les deux plaques (18, 19) pouvant être serrées de manière mobile autour de la paire plate d'électrodes émettrices (8, 9).

13. Élément récepteur (2), adapté pour être utilisé dans un système d'alimentation capacitif (1) selon l'une quelconque des revendications précédentes, l'élément récepteur étant adapté pour recevoir la puissance provenant d'un élément émetteur (7),
l'élément récepteur (2) comprenant :
- une première paire d'électrodes réceptrices plates (3, 4) située sur une première plaque (18) d'un matériau électriquement isolant, la première paire d'électrodes réceptrices plates (3, 4) étant connectée à une charge (5),
- une deuxième paire d'électrodes réceptrices plates (12, 13) située sur une deuxième plaque de matériau électriquement isolant (19), la deuxième paire d'électrodes réceptrices plates (12, 13) étant connectée à la charge (5),
l'élément émetteur (7) comprenant :
- un inducteur (6) pour faire résonner le système durant son alimentation,
- une paire d'électrodes émettrices (8, 9) connectée à un pilote (10),
- une première couche d'isolation (11) adaptée pour être positionnée entre la première paire d'électrodes réceptrices plates (3, 4) et la paire d'électrodes émettrices plates (8, 9), afin de former une impédance capacitive entre les électrodes émettrices et les électrodes réceptrices durant l'alimentation du système,
- une deuxième couche d'isolation (14) adaptée pour être positionnée entre la deuxième paire d'électrodes réceptrices plates (12, 13) et la paire d'électrodes émettrices plates (8, 9),
dans lequel la première paire et la deuxième paire d'électrodes réceptrices plates sont agencées pour être positionnées parallèlement à la paire d'électrodes émettrices plates (8, 9), de telle sorte que la paire d'électrodes émettrices plates est prise en sandwich entre les deux paires d'électrodes réceptrices,
dans lequel les électrodes des deux paires d'électrodes réceptrices ayant la même polarité (3 et 12 respectivement 4 et 13) sont électriquement connectées,
dans lequel la première plaque (18) et la deuxième plaque (19) de l'élément récepteur (2) sont agencées de telle sorte que la paire plate d'électrodes émettrices (8, 9) peut être positionnée entre la première et la deuxième plaque et
dans lequel les première et deuxième plaques sont pourvues d'un moyen pour serrer les plaques autour de la paire plate d'électrodes émettrices (8, 9), les deux plaques (18, 19) pouvant être serrées de manière mobile autour de la paire plate d'électrodes émettrices (8, 9).
